# EUROPEAN PATENT APPLICATION

(11) **EP 4 644 223 A1**
(43) Date of publication of application: **05.11.2025**
(21) Application number: 23912803.6
(22) Date of filing: 22.12.2023
(51) Int. Cl.: B63B 1/38, B63H 1/26

(54) **AIR-LUBRICATED SHIP EQUIPPED WITH PROPELLER HAVING BLADES WITH MODIFIED CROSS-SECTION**

(30) Priority: 27.12.2022 KR 20220185201
(71) Applicant: Kim, Sung Yun, Busan 48505 (KR); Park, Keunsil, Jeollanam-do 59768 (KR); Park, Junyung, Busan 48505 (KR)
(72) Inventor: Kim, Sung Yun, Busan 48505 (KR); Park, Keunsil, Jeollanam-do 59768 (KR); Park, Junyung, Busan 48505 (KR)
(74) Representative: Garavelli, Paolo
(86) International application number: PCT/KR2023/021368
(87) International publication number: WO 2024/144128

(57) **Abstract**

The present invention relates to an air-lubricated ship equipped with a propeller that overcomes a reduction in driving force due to inflow air, while supplying air using a suction force generated by an increasing flow rate due to the movement of the ship, and minimizing, by air supplied to the bottom of the ship, residual air introduced to the periphery of the propeller, in order to minimize energy for supplying air to the bottom and the sides of the ship.

## Description

### Fields of the invention

The present invention relates to an energy-saving air lubrication system for supplying air to ships and to an air lubrication ship equipped with a propeller that overcomes the propulsion efficiency degradation phenomenon caused by air inflow into the propeller, thereby achieving high hull efficiency.

### Background

In response to global warming, technologies applying air lubrication systems to hulls for drag reduction are being widely introduced internationally in the shipping and shipbuilding industries. These air lubrication systems are categorized into air bubbles, air layers, and air cavities, and require significant additional energy to inject the air necessary for their maintenance.

Although air lubrication ships are highly effective in reducing drag, the air supplied below the waterline during navigation flows into the propeller, causing propulsion efficiency issues, thereby preventing full benefit from the drag-reduction effects.

### Detailed description of the invention

### Technical problem

### [Detailed description of the invention]

To achieve the above objectives, a wedge-shaped air duct (300) with an air outlet (450) is provided on the bottom surface (401) of the hull. The wedge-shaped air duct (300), arranged on the side surface (470) and positioned above the fully loaded waterline, receives air through the open end of the wedge-shaped duct and its outlet (450), supplying air to the side of the hull (470). Rule 91, April 10^{th}, 2024

Also, an air inlet pipe is protruded at a certain height from the hull bottom (401) into the air distributor (500). A protruding ledge (301) is formed on the hull bottom side with the air outlet (450), so that air remains even when the ship is docked, thus preventing marine organism attachment and ensuring smooth air flow.

Also, a stern dam (210) and a stern step (230) are installed near the propeller (P) to prevent the inflow of air into the propeller from the air lubrication system. Even if some air bubbles remain underwater near the propeller (P), the use of a propeller (P) with improved cross-sectional blades (1) improves propulsion efficiency. Rule 91, April 10^{th}, 2024

This specification minimizes energy consumption for supplying air to the air layer lubrication system, specifically to the air lubrication system of bottom surface (401) and side surface (470), air intake-type wedge-shaped air ducts (300) are installed,

This specification also aims to prevent marine biological fouling in the air supply system at the bottom (401), thus ensuring proper air flow and maintenance.

Also, to prevent air supplied through the wedge-shaped air ducts (300) during navigation from entering the propeller (P), and to provide an air lubrication ship with improved hull efficiency that maximizes the drag reduction effect.

### Means for solving the problem

Hereinafter, embodiments of the air lubrication ship of the present invention will be described in detail with reference to the drawings. Rule 91, April 10^{th}, 2024

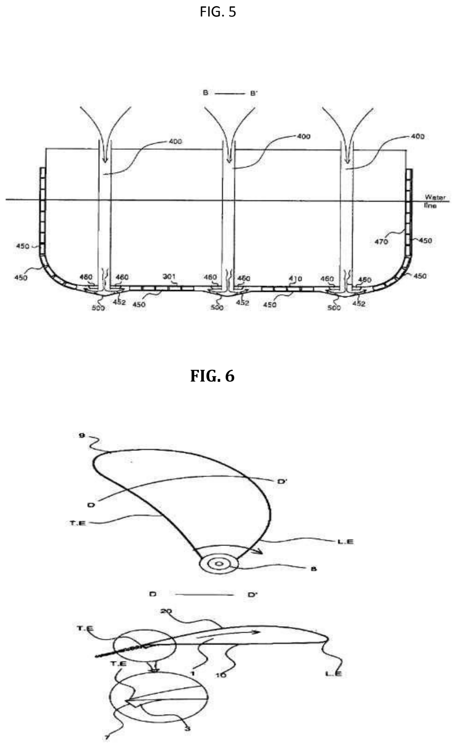

As mentioned earlier, the wedge-shaped air duct (300) placed on the hull bottom (401) may be installed transversely, connected to an air distributor (500) at the lower end of the air inlet pipe (400) from the deck (100). As the connection shapes differ, an adapter is used. An air passage (451) is provided from the height of the pipe end, ensuring a certain amount of air remains in the air cavity (460) of the distributor (500) like the example of the drawing 5, thus preventing marine biological fouling during long-term operation.

Also, a structure combining wedge-shaped air duct (300), adapter, air distributor (500), air inlet pipe (400), and adapter again in series may be installed as in unit sets, with one or more arranged for the air lubrication ship.

Multiple rows of wedge-shaped air ducts (300) may be arranged depending on the air lubrication state of the hull on the bottom surface (401).

A longitudinal partition wall (250) may be installed to prevent air supplied to the bottom (401) from moving to the side (470).

As shown in the representative figure, a low-pressure region is formed near the air outlet (450) at the aft side of the wedge-shaped air duct (300) during navigation, causing air to flow in from the deck (100) through the inlet pipe (400) to the bottom surface (401).

For side (470) air lubrication, the wedge-shaped air duct (300) is placed above the waterline as in drawing 5, so that even with wave height variations, air can flow through both the outlet (450) and the open end. These ducts (300) may be installed from the point where the hull bottom ends (401), and several can be arranged from the bulbous bow to the stern.

To prevent the air supplied to the bottom (401) and sides (470) through ducts (300) from entering the propeller (P) due to hull movement and suction force, a stern dam (210) and step (230) are installed. Even if air reaches the underwater area near the propeller (P), a specially shaped propeller (P) with an improved blade cross-section (1) prevents efficiency reduction. This shape is characterized by a thickened trailing edge (7), as shown in drawing 6.

The improved blade's high-pressure side (10) trailing edge curvature (3) may vary depending on the ship type.

### Effects of the invention

As described above, the triangular wedge-shaped air duct (300) enables air to flow into the hull bottom (401) and side (470) using pressure differences caused by hull movement, eliminating the need for energy input for air supply in the bottom surface (401), thus saving energy.

By placing a stern dam (210) and step (230) near the propeller (P), air inflow is minimized, and propulsion efficiency is maintained even if some residual air is present underwater. The specially shaped blade cross-section (1) of the propeller (P) allows for full realization of air lubrication benefits.

### Brief description of drawings

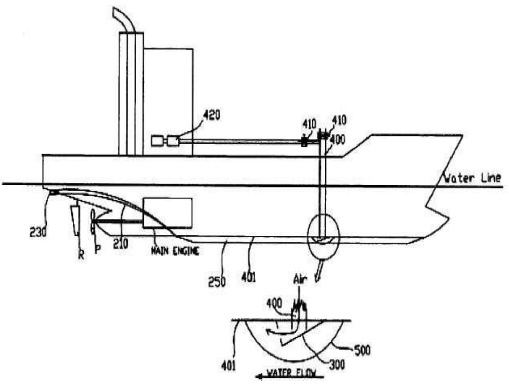

Drawing 1 - An example of the air supply system and structure.

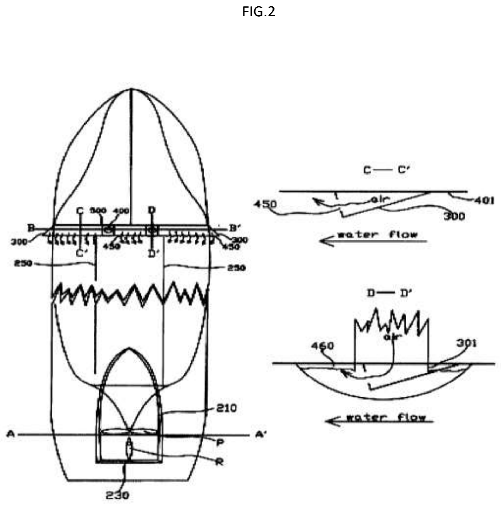

Drawing 2 - Example layout of bottom wedge-shaped air duct (300), air distributor (500), and partition wall (250).

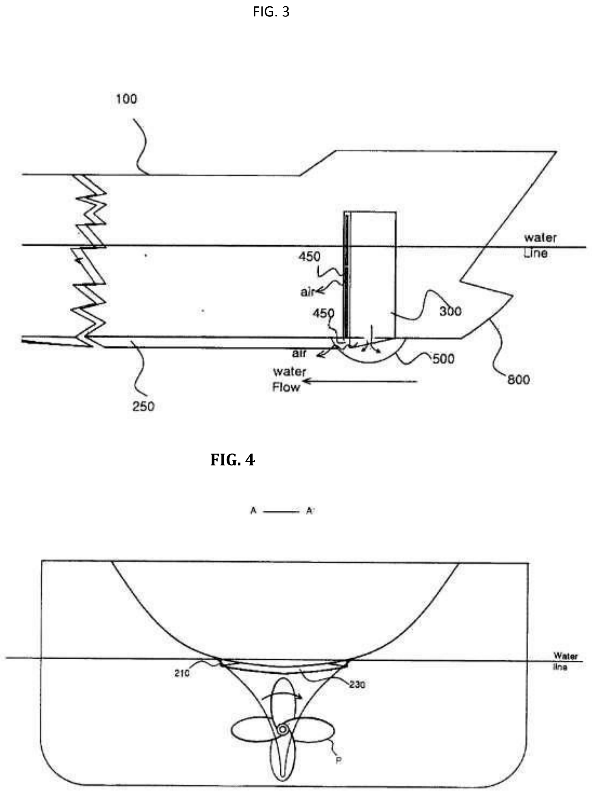

Drawing 3 - Structure and placement of the wedge-shaped air duct (300).
Drawing 4 - An example of the stern step (230) near the propeller (P). Rule 91, April 10^{th}, 2024
Drawing 5 - Arrangement of air distributor (500), air inlet pipe (400), and wedge-shaped air duct (300) on the bottom (401) and side (470).
Drawing 6 - Example cross-section (1) of the improved propeller blade. Industrial applicability

As a greenhouse gas reduction technology to counteract global warming, this invention is in high demand and is expected to contribute significantly to the shipbuilding and shipping industries.

## Claims

1. In an air lubrication ship, wedge-shaped air ducts (300), adapters, air distributors (500), and air inlet pipes (400) are arranged as unit sets on the bottom (401) and side (470), with at least one row of such structures provided.

2. The air lubrication ship of Claim 1, wherein a protruding ledge (301) is formed on the hull bottom (401) at the side of the air outlet (450), allowing air to remain even when docked to prevent marine biological fouling inside the wedge-shaped air duct (300). Rule 91, April 10^{th}, 2024

3. An air lubrication ship comprising an air inlet pipe (400) and an air distributor (500) supplying air from the deck (100) to the wedge-shaped air duct (300).

4. An air lubrication ship comprising an air distributor (500) with an air passage (451) from the height of the inlet pipe (400) end to ensure air remains in an air cavity (460) inside the distributor.

5. An air lubrication ship with a stern dam (210) and stern step (230) to prevent air supplied to the bottom (401) and side (470) from entering the propeller (P).

6. An air lubrication ship with a propeller (P) comprising blades with a thickened trailing edge (7).
